# EUROPÄISCHE PATENTSCHRIFT

(11) **EP 4 173 909 B1**
(45) Veröffentlichungstag und Bekanntmachung des Hinweises auf die Patenterteilung: **18.09.2024**
(21) Anmeldenummer: 22201977.0
(22) Anmeldetag: 17.10.2022
(51) Int. Cl.: B60T 15/02

(54) **VENTILVORRICHTUNG FÜR EIN SYSTEM FÜR EIN FAHRZEUG UND SYSTEM FÜR EIN FAHRZEUG**
VALVE DEVICE FOR A SYSTEM FOR A VEHICLE AND SYSTEM FOR A VEHICLE
DISPOSITIF DE SOUPAPE POUR SYSTÈME DE VÉHICULE ET SYSTÈME POUR VÉHICULE

(30) Priorität: 27.10.2021 DE 102021127909
(43) Veröffentlichungstag der Anmeldung: 03.05.2023
(73) Patentinhaber: KNORR-BREMSE Systeme für Nutzfahrzeuge GmbH, 80809 München (DE)
(72) Erfinder: BELLING, Michael, 71272 Renningen (DE); KAUFMANN, Christian, 71063 Sindelfingen (DE); MATT, Alexander, 76646 Bruchsal (DE); DRAYSS, Dominikus, 74731 Walldürn (DE)

(56) Entgegenhaltungen:
- US-A1- 2020 406 879

## Beschreibung

Die vorliegende Erfindung bezieht sich auf eine Ventilvorrichtung für ein System für ein Fahrzeug und auf ein System für ein Fahrzeug, insbesondere ein elektronisches Bremssystem.

Im Zuge des automatisierten oder autonomen Fahrens von Fahrzeugen aller Art sind beispielsweise Redundanzen zu schaffen. Diese Redundanzen sind insbesondere so auszulegen, dass das Fahrzeug nicht in einen sicherheitskritischen oder unbeherrschbaren Zustand geraten kann. Es wird zum Beispiel dazu übergegangen, Systeme, wie beispielsweise das elektrische Bremssystem EBS oder ABS, mehrfach im Fahrzeug zu platzieren. Eine andere Möglichkeit kann darin bestehen, das System mit ähnlichen Teilsystemen, welche die Funktionalität abbilden können, zu ergänzen. Im Fehlerfall kann das fehlerhafte System abgeschaltet werden und das zweite fehlerfreie System kann die Aufgabe übernehmen und so die Redundanz herstellen. Um beispielsweise ein elektrisches Bremssystem in Nutzfahrzeugen redundant darstellen zu können, würde sich somit insbesondere eine Anzahl von Drucksteuerventilen an jeder Achse einem jeweiligen Rad verdoppeln.

Dokument US2020/406879 A1 offenbart eine Ventilvorrichtung für eine elektropneumatische Ausrüstung eines Fahrzeugs.

Vor diesem Hintergrund ist es die Aufgabe der vorliegenden Erfindung, eine verbesserte Ventilvorrichtung für ein System für ein Fahrzeug und ein verbessertes System für ein Fahrzeug zu schaffen.

Diese Aufgabe wird durch eine Ventilvorrichtung für ein System für ein Fahrzeug und durch ein System für ein Fahrzeug gemäß den Hauptansprüchen gelöst.

Gemäß Ausführungsformen kann insbesondere ein geschütztes Drucksteuerventil für Doppelnutzung oder Mehrfachnutzung für ein redundant auszulegendes Fahrzeugsystem, beispielsweise Fahrzeugbremssystem bereitgestellt werden. Hierbei können elektrische Schutzschaltungen, die jeweils eine elektrische Sicherungseinrichtung und ein Diodenelement umfassen, in das Drucksteuerventil integriert sein. Somit kann beispielsweise in einem System für ein Fahrzeug insbesondere ein Drucksteuerventil auf mittels der Sicherungseinrichtungen elektrisch geschützte Weise durch zwei Steuergeräte verwendet werden, um eine Redundanz in dem System darzustellen.

Vorteilhafterweise kann gemäß Ausführungsformen insbesondere ein kostengünstiges Mehrfachsystem bereitgestellt werden, wobei eine Verdoppelung von Drucksteuerventilen vermieden werden kann. Somit können nicht nur Kosten sondern auch Bauraum und ein Aufwand für eine Verdrahtung eingespart werden, sodass eine solche Ventilvorrichtung für ein System auf einfache Weise ins Fahrzeug integriert werden kann. Eine Integration der Schutzschaltungen, von denen jede beispielsweise als eine Kombination aus Sicherung und Diode ausgeführt ist, in ein Ventil, insbesondere ein Drucksteuerventil, hat den Vorteil, dass eine Fahrzeugverdrahtung bei der Doppelnutzung erleichtert wird. So kann beispielsweise auf Y-Kabel, welche korrosionsanfällig sein können, verzichtet werden. Es ist möglich, über geeignete Steckverbindungen das Drucksteuerventil anzupassen. Beispielsweise können statt eines 3-Pin-Anschlusses auch zwei 3-Pin-Anschlüsse an einem Drucksteuerventil realisiert werden.

Eine Ventilvorrichtung für ein System für ein Fahrzeug, wobei das System ein erstes Steuergerät und ein zweites Steuergerät aufweist, wobei die Steuergeräte elektrisch mit der Ventilvorrichtung verbindbar sind, weist folgende Merkmale auf eine Ventileinheit zum Einstellen eines Drucks eines Arbeitsmediums für das System, wobei die Ventileinheit zumindest einen Aktor zum Betätigen der Ventileinheit aufweist; einen ersten Versorgungsanschluss zum elektrischen Verbinden des Aktors mit dem ersten Steuergerät, einen zweiten Versorgungsanschluss zum elektrischen Verbinden des Aktors mit dem zweiten Steuergerät, einen ersten Hauptanschluss zum elektrischen Verbinden des Aktors mit dem ersten Steuergerät und einen zweiten Hauptanschluss zum elektrischen Verbinden des Aktors mit dem zweiten Steuergerät;
eine erste elektrische Schutzschaltung und eine zweite elektrische Schutzschaltung, wobei die erste Schutzschaltung elektrisch zwischen den ersten Versorgungsanschluss und den zweiten Versorgungsanschluss einerseits und den Aktor andererseits geschaltet ist, wobei die zweite Schutzschaltung elektrisch zwischen den Aktor einerseits und den ersten Hauptanschluss und den zweiten Hauptanschluss andererseits geschaltet ist, wobei jede Schutzschaltung eine elektrische Sicherungseinrichtung und ein Diodenelement aufweist, die seriell zu zumindest dem ersten und/oder zweiten Versorgungsanschlüsse oder zumindest dem ersten und/oder zweiten Hauptanschluss eingefügt sind; und
ein Ventilgehäuse zum Aufnehmen der Ventileinheit und der Schutzschaltungen.

Bei dem Fahrzeug kann es sich um ein Kraftfahrzeug, insbesondere um ein Nutzfahrzeug handeln, beispielsweise um einen Lastkraftwagen oder dergleichen. Das System kann beispielsweise als ein elektronisches Bremssystem oder elektropneumatisches Bremssystem oder anderes Bremssystem oder anderes Fahrzeugsystem ausgeführt sein. Das erste Steuergerät kann ein primäres Steuergerät sein, wobei das zweite Steuergerät ein redundantes Steuergerät sein kann. Das erste Steuergerät kann einer ersten Funktion oder Assistenzfunktion des Fahrzeugs oder des Systems zugeordnet sein, wobei das zweite Steuergerät einer zweiten Funktion oder Assistenzfunktion des Fahrzeugs oder des Systems zugeordnet sein kann. Die Vorrichtung kann als ein Drucksteuerventil ausgeführt sein. Die Ventileinheit und somit die Ventilvorrichtung kann zumindest ein Magnetventil aufweisen. Der Aktor kann eine widerstandsbehaftete Induktivität umfassen. Das Diodenelement kann eine Diode, eine Halbleiterdiode oder dergleichen aufweisen. Die Sicherungseinrichtung kann eine Schmelzsicherung oder andere elektrische Sicherung aufweisen.

Gemäß einer Ausführungsform kann der Aktor über den ersten Versorgungsanschluss an ein erstes elektrisches Versorgungspotenzial des ersten Steuergeräts anschließbar sein. Hierbei kann der Aktor über den zweiten Versorgungsanschluss an ein zweites elektrisches Versorgungspotenzial des zweiten Steuergeräts anschließbar sein. Alternativ oder zusätzlich kann auch der Aktor über den ersten Versorgungsanschluss an ein elektrisches Versorgungspotenzial des ersten Steuergeräts anschließbar sein, wobei der Aktor über den zweiten Versorgungsanschluss an das elektrische Versorgungspotenzial des zweiten Steuergeräts anschließbar ist, wobei der Aktor über einen ersten Hauptanschluss mit einem ersten elektrischen Massepotenzial und über den zweiten Hauptanschluss mit einem zweiten elektrischen Massepotenzial der Steuergeräte anschließbar ist. Dabei kann der Aktor über den ersten Hauptanschluss und den zweiten Hauptanschluss an ein gemeinsames elektrisches Massepotenzial der Steuergeräte anschließbar sein. Eine solche Ausführungsform bietet den Vorteil, dass trotz der Nutzung eines gemeinsamen Massepotenzials für den zumindest einen Aktor eine redundante Ansteuerung der Ventilvorrichtung auf vor Fehlern wie beispielsweise Kurzschlüssen und dergleichen geschützte Weise realisiert werden kann.

Auch kann das Diodenelement der ersten Schutzschaltung zwischen den ersten Versorgungsanschluss und den Aktor geschaltet sein. Hierbei kann die Sicherungseinrichtung der ersten Schutzschaltung zwischen den zweiten Versorgungsanschluss und den Aktor geschaltet sein. Dabei kann die Sicherungseinrichtung der zweiten Schutzschaltung zwischen den Aktor und den ersten Hauptanschluss geschaltet sein. Ferner kann das Diodenelement der zweiten Schutzschaltung zwischen den Aktor und den zweiten Hauptanschluss geschaltet sein. Eine solche Ausführungsform bietet den Vorteil, dass eine zuverlässige Absicherung vor Fehlerfällen bei einer Mehrfachnutzung der Ventilvorrichtung erreicht werden kann.

Insbesondere kann eine Durchlassrichtung des Diodenelements der ersten Schutzschaltung von dem ersten Versorgungsanschluss zu dem Aktor verlaufen. Hierbei kann eine Durchlassrichtung des Diodenelements der zweiten Schutzschaltung von dem Aktor zu dem zweiten Hauptanschluss verlaufen. Eine solche Ausführungsform bietet den Vorteil, dass ein redundanter Betrieb der Ventilvorrichtung durch zwei Steuergeräte auf sichere und fehlergeschützte Weise ermöglicht wird.

Zudem kann die Ventileinheit zumindest einen weiteren Aktor zum Betätigen der Ventileinheit aufweisen. Hierbei kann die Ventilvorrichtung mindestens einen dritten Versorgungsanschluss zum elektrischen Verbinden des weiteren Aktors mit dem ersten Steuergerät, mindestens einen vierten Versorgungsanschluss zum elektrischen Verbinden des weiteren Aktors mit dem zweiten Steuergerät und zumindest eine weitere Schutzschaltung aufweisen. Dabei kann die weitere Schutzschaltung elektrisch zwischen den dritten Versorgungsanschluss und den vierten Versorgungsanschluss einerseits und den weiteren Aktor andererseits geschaltet sein. Die zweite Schutzschaltung kann elektrisch zwischen den weiteren Aktor einerseits und den ersten Hauptanschluss und den zweiten Hauptanschluss andererseits geschaltet sein. Der Aktor der Ventileinheit kann beispielsweise Teil von einem Einlassventil der Ventilvorrichtung sein, wobei der weitere Aktor beispielsweise Teil von einem Auslassventil der Ventilvorrichtung sein kann. Eine solche Ausführungsform bietet den Vorteil, dass bei minimalem Aufwand eine beliebige Anzahl von Aktoren der Ventilvorrichtung abgesichert werden kann.

Dabei kann das Diodenelement der weiteren Schutzschaltung zwischen den dritten Versorgungsanschluss und den weiteren Aktor geschaltet sein. Die Sicherungseinrichtung der weiteren Schutzschaltung kann zwischen den vierten Versorgungsanschluss und den weiteren Aktor geschaltet sein. Insbesondere kann auch eine Durchlassrichtung des Diodenelements der weiteren Schutzschaltung von dem dritten Versorgungsanschluss zu dem weiteren Aktor verlaufen. Eine solche Ausführungsform bietet den Vorteil, dass eine zuverlässige Absicherung vor Fehlerfällen für einen robusten redundanten Betrieb einer Ventilvorrichtung mit mehreren Aktoren realisiert werden kann.

Ferner kann dabei der weitere Aktor über den dritten Versorgungsanschluss an das erste elektrische Versorgungspotenzial anschließbar sein. Der weitere Aktor kann über den vierten Versorgungsanschluss an das zweite elektrische Versorgungspotenzial anschließbar sein. Eine solche Ausführungsform bietet den Vorteil, dass auch der weitere Aktor mit minimalem Aufwand in die Absicherung eingebunden und somit geschützt werden kann.

Auch können die Sicherungseinrichtungen der Schutzschaltungen auswechselbar in den Schutzschaltungen angeordnet sein. Eine solche Ausführungsform bietet den Vorteil, dass nach einem eingetretenen Fehlerfall eine einfache und kostengünstige Auswechslung einer Sicherungseinrichtung oder mehrerer Sicherungseinrichtungen vorgenommen werden kann, um die Funktionsfähigkeit der Schutzschaltungen wiederherzustellen.

Ein System für ein Fahrzeug umfasst folgende Merkmale:
eine Ausführungsform der vorstehend genannten Ventilvorrichtung; und
das erste Steuergerät und das zweite Steuergerät, wobei die Steuergeräte elektrisch mit der Ventilvorrichtung verbunden sind.

Die Ventilvorrichtung kann mittels elektrischer Leitungen mit dem ersten Steuergerät und mit dem zweiten Steuergerät verbindbar oder verbunden sein. Das System kann auch zumindest eine weitere Ventilvorrichtung aufweisen.

Auch kann die Ventilvorrichtung eine erste Gruppe von mechanisch zusammengefassten elektrischen Anschlüssen zum Anschließen des ersten Steuergeräts und eine zweite Gruppe von mechanisch zusammengefassten elektrischen Anschlüssen zum Anschließen des zweiten Steuergeräts aufweisen. Ein Stecker geht zu dem ersten Steuergerät, der andere zu dem zweiten Steuergerät. Das Lockern eines Steckers führt nicht zu einem Ausfall der Funktionsfähigkeit des Systems.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Systems;
Fig. 2 eine schematische Darstellung eines Systems;
Fig. 3 eine schematische Darstellung eines Fahrzeugs mit einem System gemäß einem Ausführungsbeispiel; und
Fig. 4 eine schematische Darstellung eines Ausführungsbeispiels einer Ventilvorrichtung für ein System.

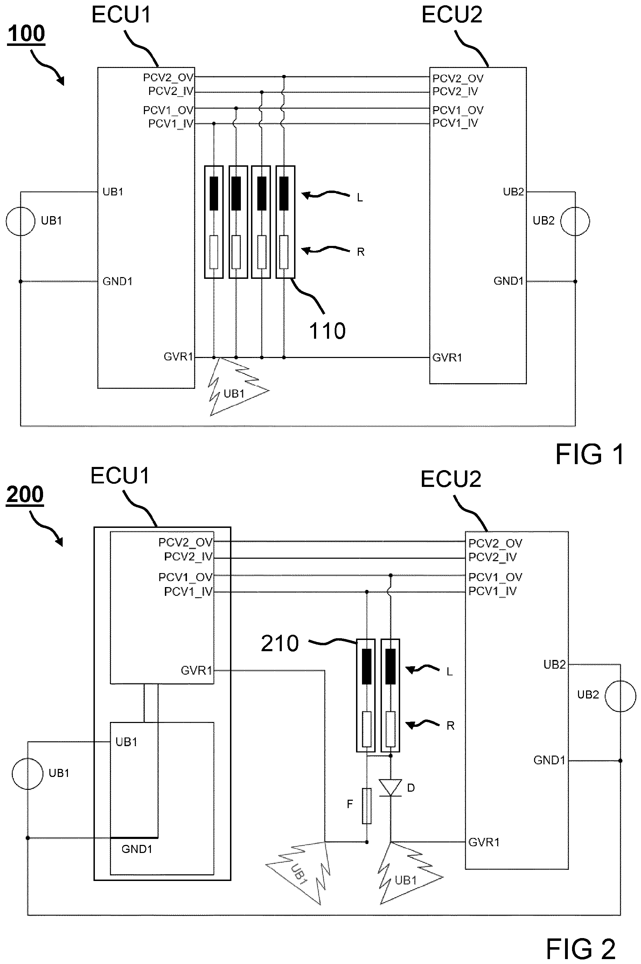

**Fig. 1** zeigt eine schematische Darstellung eines Systems 100. Von dem System 100 sind hierbei insbesondere ein erstes Steuergerät oder primäres Steuergerät ECU1, ein zweites Steuergerät oder redundantes Steuergerät ECU2 und eine Mehrzahl von Aktoren 110 von Drucksteuerventilen (PCV = Pressure Control Valve) gezeigt. Bei dem System handelt es sich beispielsweise um ein Bremssystem. Mehrere elektronische Steuergeräte, hier das erste Steuergerät ECU1 und das zweite Steuergerät ECU2, zur Bremssteuerung verwenden gemeinsame Drucksteuerventile mit den Aktoren 110, um eine Redundanz in dem System 100 darzustellen.

Beispielhaft sind hierbei zwei Drucksteuerventile mit jeweils zwei Aktoren 110 gezeigt. Jeder der Aktoren 110 ist in der schematischen Darstellung von Fig. 1 als ein Ersatzschaltbild aus einer Induktivität L und einem Widerstand R veranschaulicht. Das erste Steuergerät ECU1 umfasst Anschlüsse PCV1_IV, PCV1_OV, PCV2_IV, PCV2_OV und GVR1 zum elektrischen Anschluss an die Aktoren 110 und Anschlüsse UB1 und GND1 zum Anschluss an eine erste elektrische Spannungsquelle. Das zweite Steuergerät ECU2 umfasst Anschlüsse PCV1_IV, PCV1_OV, PCV2_IV, PCV2_OV und GVR1 zum elektrischen Anschluss an die Aktoren 110 und Anschlüsse UB2 und GND1 zum Anschluss an eine zweite elektrische Spannungsquelle.

Beispielhaft ist ferner ein Kurzschluss von UB1 zur gemeinsam verwendeten Aktuatormasse gezeigt. In einigen Fehlerfällen kann es zu einem Zustand kommen, bei dem weder das erste Steuergerät ECU1 noch das zweite Steuergerät ECU2 die Aktoren 110 ansteuern können. Bei einem Kurzschluss von UB1 oder UB2 zur gemeinsam verwendeten Aktuatormasse ist eine Ansteuerung nicht mehr möglich. Ein weiterer möglicher Fehlerfall ist der Schluss der Ansteuerung nach UB1 oder UB2. Eine ABS-Regelung beispielsweise ist in diesem Fehlerfall somit weder von der dem ersten Steuergerät ECU1 noch von dem zweiten Steuergerät ECU2 aus möglich. Eine volle Redundanz eines primären Bremssystems ist somit unter Umständen nicht gegeben.

**Fig. 2** zeigt eine schematische Darstellung eines Systems 200. Das System 200 in Fig. 2 entspricht hierbei dem System aus Fig. 1 mit Ausnahme dessen, dass lediglich ein Drucksteuerventil mit zwei Aktoren 210 vorgesehen ist, wobei zusätzlich eine Sicherung F und eine Diode D zur Absicherung des Drucksteuerventils vorgesehen sind. Mehrere elektronische Steuergeräte, hier das erste Steuergerät ECU1 und das zweite Steuergerät ECU2, zur Bremssteuerung verwenden ein gemeinsames Drucksteuerventil, welches die zwei Aktoren 210 aufweist, um eine Redundanz in dem System 200 darzustellen. Bei einem Kurzschluss von UB1 an der Aktuator-Masse GVR1 des ersten Steuergerätes ECU1 soll die Sicherung F auslösen und somit die Masseleitung GVR1, welche kurzschlussbehaftet ist, trennen. Die Diode D soll im Kurzschlussfall von UB1 auf der Seite des zweiten Steuergeräts die ECU2 schützen. In beiden Fällen lässt sich der Kurzschluss auch mit UB2 auslösen.

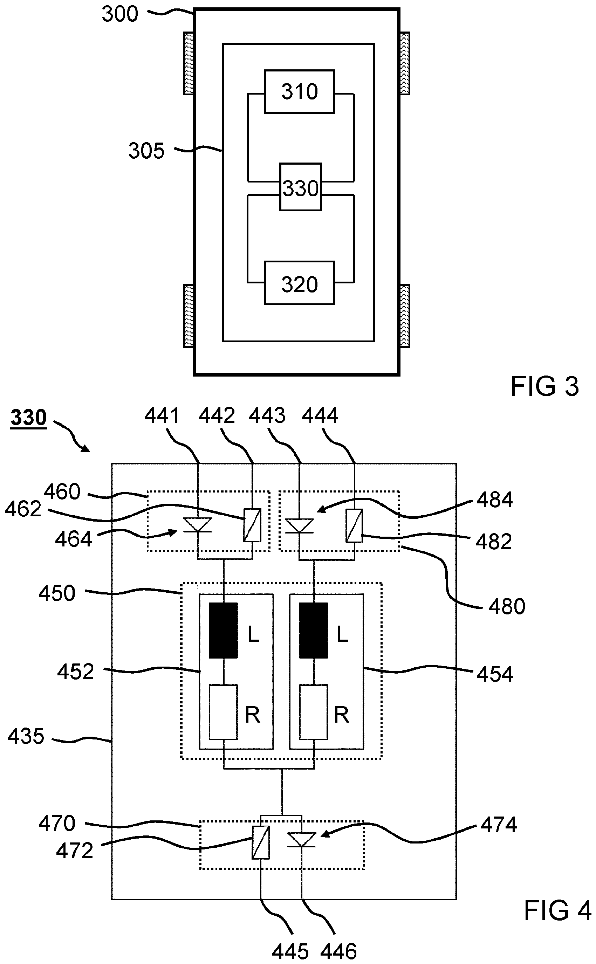

**Fig. 3** zeigt eine schematische Darstellung eines Fahrzeugs 300 mit einem System 305 gemäß einem Ausführungsbeispiel. Das System 305 kann dem System aus Fig. 2 ähneln. Das System 305 umfasst ein erstes Steuergerät 310, ein zweites Steuergerät 320 und eine Ventilvorrichtung 330. Die Steuergeräte 310 und 320 sind elektrisch mit der Ventilvorrichtung 330 verbunden. Auf die Ventilvorrichtung 330 wird nachfolgend noch detaillierter eingegangen.

**Fig. 4** zeigt eine schematische Darstellung eines Ausführungsbeispiels einer Ventilvorrichtung 330 für ein System. Das System entspricht oder ähnelt hierbei dem System aus Fig. 3. Somit umfasst das System ein erstes Steuergerät und ein zweites Steuergerät, die elektrisch mit der Ventilvorrichtung 330 verbindbar oder verbunden sind. Die Ventilvorrichtung 330 entspricht oder ähnelt der Ventilvorrichtung aus Fig. 3. Insbesondere ist die Ventilvorrichtung 330 als ein Drucksteuerventil (PCV = Pressure Control Valve) für das System ausgeführt.

Die Ventilvorrichtung 330 umfasst eine Ventileinheit 450, einen ersten Versorgungsanschluss 441, einen zweiten Versorgungsanschluss 442, einen ersten Hauptanschluss 445, einen zweiten Hauptanschluss 446, eine erste elektrische Schutzschaltung 460, eine zweite elektrische Schutzschaltung 470 und ein Ventilgehäuse 435. Das Ventilgehäuse 435 ist ausgeformt, um die Ventileinheit 450 und die Schutzschaltungen 460 und 470 aufzunehmen.

Die Ventileinheit 450 ist ausgebildet, um einen Druck eines Arbeitsmediums für das System einzustellen. Die Ventileinheit 450 umfasst zumindest einen Aktor 452 zum Betätigen der Ventileinheit 450. Die Ventileinheit 450 ist innerhalb des Ventilgehäuses 435 angeordnet. Der zumindest einen Aktor 452 umfasst eine widerstandsbehaftete Induktivität, wie es in der Darstellung von Fig. 4 durch ein Ersatzschaltbild mit einer Induktivität L und einem Widerstand R veranschaulicht ist.

Der erste Versorgungsanschluss 441 dient zum elektrischen Verbinden des Aktors 452 mit dem ersten Steuergerät des Systems. Der zweite Versorgungsanschluss 442 dient zum elektrischen Verbinden des Aktors 452 mit dem zweiten Steuergerät des Systems. Der erste Hauptanschluss 445 dient zum elektrischen Verbinden des Aktors 452 mit dem ersten Steuergerät. Der zweite Hauptanschluss 446 dient zum elektrischen Verbinden des Aktors 452 mit dem zweiten Steuergerät.

Die erste Schutzschaltung 460 und die zweite Schutzschaltung 470 sind innerhalb des Ventilgehäuses 435 angeordnet. Die erste Schutzschaltung 460 ist elektrisch zwischen den ersten Versorgungsanschluss 441 und den zweiten Versorgungsanschluss 442 einerseits und den Aktor 452 andererseits geschaltet. Die erste Schutzschaltung 460 umfasst eine elektrische Sicherungseinrichtung 462 und ein Diodenelement 464, die seriell in die jeweilige Versorgungs-/Masseverbindung eingefügt sind. Die zweite Schutzschaltung 470 ist elektrisch zwischen den Aktor 452 einerseits und den ersten Hauptanschluss 445 und den zweiten Hauptanschluss 446 andererseits geschaltet. Die zweite Schutzschaltung 470 umfasst eine elektrische Sicherungseinrichtung 472 und ein Diodenelement 474, die seriell in die jeweilige Versorgungs-/Masseverbindung eingefügt sind. Insbesondere sind die Sicherungseinrichtungen 462 und 472 ausgebildet, um in einem elektrischen Fehlerfall in dem System, beispielsweise bei einem Kurzschluss, auszulösen und den fehlerhaften Versorgungs-/Massepfad aufzutrennen. Ferner sind die Diodenelemente 464 und 474 ausgebildet, um in einem solchen Fehlerfall ebenfalls unzulässigen Stromfluss zu verhindern.

Gemäß einem Ausführungsbeispiel ist das Diodenelement 464 der ersten Schutzschaltung 460 zwischen den ersten Versorgungsanschluss 441 und den Aktor 452 geschaltet. Ferner ist hierbei die Sicherungseinrichtung 462 der ersten Schutzschaltung 460 zwischen den zweiten Versorgungsanschluss 442 und den Aktor 452 geschaltet. Zudem ist hierbei die Sicherungseinrichtung 472 der zweiten Schutzschaltung 470 zwischen den Aktor 452 und den ersten Hauptanschluss 445 geschaltet. Auch ist hierbei das Diodenelement 474 der zweiten Schutzschaltung 470 zwischen den Aktor 452 und den zweiten Hauptanschluss 446 geschaltet. Beispielsweise verläuft dabei eine Durchlassrichtung des Diodenelements 464 der ersten Schutzschaltung 460 von dem ersten Versorgungsanschluss 441 zu dem Aktor 452. Ferner verläuft beispielsweise eine Durchlassrichtung des Diodenelements 474 der zweiten Schutzschaltung 470 von dem Aktor 452 zu dem zweiten Hauptanschluss 464.

Insbesondere ist der Aktor 452 über den ersten Versorgungsanschluss 441 an ein erstes elektrisches Versorgungspotenzial des ersten Steuergeräts anschließbar und ist über den zweiten Versorgungsanschluss 442 an ein zweites elektrisches Versorgungspotenzial des zweiten Steuergeräts anschließbar. Ferner ist der Aktor 452 über jeden der Masseanschlüsse 445 und 446 an ein gemeinsames elektrisches Massepotenzial der Steuergeräte anschließbar.

Gemäß einem weiteren Ausführungsbeispiel umfasst die Ventileinheit 450 zumindest einen weiteren Aktor 454 zum Betätigen der Ventileinheit 450. Auch umfasst gemäß diesem Ausführungsbeispiel die Ventilvorrichtung 330 mindestens einen dritten Versorgungsanschluss 443 zum elektrischen Verbinden des weiteren Aktors 454 mit dem ersten Steuergerät, mindestens einen vierten Versorgungsanschluss 444 zum elektrischen Verbinden des weiteren Aktors 454 mit dem zweiten Steuergerät und zumindest eine weitere elektrische Schutzschaltung 480. Die weitere Schutzschaltung 480 umfasst ebenfalls eine elektrische Sicherungseinrichtung 482 und ein Diodenelement 484, die seriell in die jeweilige Versorgungs-/Masseverbindung eingefügt sind. Die weitere Schutzschaltung 480 ist elektrisch zwischen den dritten Versorgungsanschluss 443 und den vierten Versorgungsanschluss 444 einerseits und den weiteren Aktor 454 andererseits geschaltet. Die zweite Schutzschaltung 470 ist auch elektrisch zwischen den weiteren Aktor 454 einerseits und die Masseanschlüsse 445 und 446 andererseits geschaltet. Genauer gesagt ist hierbei insbesondere das Diodenelement 484 der weiteren Schutzschaltung 480 zwischen den dritten Versorgungsanschluss 443 und den weiteren Aktor 454 geschaltet, wobei die Sicherungseinrichtung 482 der weiteren Schutzschaltung 480 zwischen den vierten Versorgungsanschluss 444 und den weiteren Aktor 454 geschaltet ist. Beispielsweise ist dabei der weitere Aktor 454 über den dritten Versorgungsanschluss 443 an das erste elektrische Versorgungspotenzial anschließbar und ist über den vierten Versorgungsanschluss 444 an das zweite elektrische Versorgungspotenzial anschließbar. Ferner ist der weitere Aktor 454 über jeden der Masseanschlüsse 445 und 446 an ein gemeinsames elektrisches Massepotenzial der Steuergeräte anschließbar.

Das Drucksteuerventil bzw. die Ventilvorrichtung 330 umfasst beispielsweise ein Einlassventil, welches den Aktor 452 aufweist, und ein Auslassventil, welches den weiteren Aktor 454 aufweist, wobei die Aktoren 452 und 454 an eine gemeinsam verwendete Masse anschließbar oder angeschlossen sind. Ansteuerungsleitungen bzw. Versorgungsleitungen sind separat von den Steuergeräten zu den Aktoren 452 und 454 geführt.

Gemäß einem Ausführungsbeispiel sind die Sicherungseinrichtungen 462, 472 und optional 482 der Schutzschaltungen 460, 470 und optional 480 auswechselbar in den Schutzschaltungen 460, 470 und optional 480 angeordnet. Somit kann jede der Sicherungseinrichtungen 462, 472 und optional 482 einzeln ausgewechselt bzw. erneuert werden, wenn dies erforderlich ist.

Unter Bezugnahme auf die vorstehend beschriebenen Figuren sind nachfolgend Ausführungsbeispiele und Vorteile derselben zusammenfassend und mit anderen Worten kurz erläutert.

Abhilfe im Hinblick auf beispielsweise die unter Bezugnahme auf Fig. 1 genannte Fehlerquelle kann somit durch die Schutzschaltungen 460, 470 und optional 480, welche vorteilhafterweise in das Drucksteuerventil bzw. die Ventilvorrichtung 330 integriert sind, genauer gesagt innerhalb des Ventilgehäuses 435 angeordnet sind, geschaffen werden, um weitere Fehlerquellen zu vermeiden. So kann beispielsweise das erste Steuergerät 310 (äquivalent zu dem ersten Steuergerät ECU1) uneingeschränkt die Kontrolle der Ventilvorrichtung 330 an das zweite Steuergerät 320 (äquivalent zu dem zweiten Steuergerät ECU2) übergeben. Das erste Steuergerät 310 kann uneingeschränkt die Ventilvorrichtung 330 bzw. deren Aktor 452 oder Aktoren 452 und 454 verwenden. Die Integration der Schutzschaltungen 460, 470 und optional 480 kann somit auch in einen Ansteuerungspfad für die Ventilvorrichtung 330 übernommen werden.

### BEZUGSZEICHENLISTE

- 100: System
- 110: Aktoren
- GND1: gemeinsame Masse
- GVR1: Hauptanschluss
- L: Induktivität
- PCV1_IV: Versorgungsanschluss
- PCV1_OV: Versorgungsanschluss
- PCV2_IV: Versorgungsanschluss
- PCV2_OV: Versorgungsanschluss
- ECU1: erstes Steuergerät
- R: Widerstand
- ECU2: zweites Steuergerät
- UB1: erstes Versorgungspotenzial
- UB2: zweites Versorgungspotenzial

- 200: System
- 210: Aktoren
- D: Diode
- F: Sicherung

- 300: Fahrzeug
- 305: System
- 310: erstes Steuergerät
- 320: zweites Steuergerät
- 330: Ventilvorrichtung

- 435: Ventilgehäuse
- 441: erster Versorgungsanschluss
- 442: zweiter Versorgungsanschluss
- 443: dritter Versorgungsanschluss
- 444: vierter Versorgungsanschluss
- 445: erster Hauptanschluss
- 446: zweiter Hauptanschluss
- 450: Ventileinheit
- 452: Aktor
- 454: weiterer Aktor
- 460: erste elektrische Schutzschaltung
- 462: elektrische Sicherungseinrichtung
- 464: Diodenelement
- 470: zweite elektrische Schutzschaltung
- 472: elektrische Sicherungseinrichtung
- 474: Diodenelement
- 480: weitere elektrische Schutzschaltung
- 482: elektrische Sicherungseinrichtung
- 484: Diodenelement
- L: Induktivität
- R: Widerstand

## Patentansprüche

1. Ventilvorrichtung (330) für ein System (305) für ein Fahrzeug (300), wobei das System (305) ein erstes Steuergerät (310) und ein zweites Steuergerät (320) aufweist, wobei die Steuergeräte (310, 320) elektrisch mit der Ventilvorrichtung (330) verbindbar sind, wobei die Ventilvorrichtung (330) folgende Merkmale aufweist eine Ventileinheit (450) zum Einstellen eines Drucks eines Arbeitsmediums für das System (305), wobei die Ventileinheit (450) zumindest einen Aktor (452) zum Betätigen der Ventileinheit (450) aufweist;
einen ersten Versorgungsanschluss (441) zum elektrischen Verbinden des Aktors (452) mit dem ersten Steuergerät (310), einen zweiten Versorgungsanschluss (442) zum elektrischen Verbinden des Aktors (452) mit dem zweiten Steuergerät (320), einen ersten Hauptanschluss (445) zum elektrischen Verbinden des Aktors (452) mit dem ersten Steuergerät (310) und einen zweiten Hauptanschluss (446) zum elektrischen Verbinden des Aktors (452) mit dem zweiten Steuergerät (320);
eine erste elektrische Schutzschaltung (460) und eine zweite elektrische Schutzschaltung (470), wobei die erste Schutzschaltung (460) elektrisch zwischen den ersten Versorgungsanschluss (441) und den zweiten Versorgungsanschluss (442) einerseits und den Aktor (452) andererseits geschaltet ist, wobei die zweite Schutzschaltung (470) elektrisch zwischen den Aktor (452) einerseits und den ersten Hauptanschluss (445) und den zweiten Hauptanschluss (446) andererseits geschaltet ist, wobei jede Schutzschaltung (460, 470) eine elektrische Sicherungseinrichtung (462, 472) und ein Diodenelement (464, 474) aufweist, die seriell in zu zumindest dem ersten (441) und/oder zweiten (442) Versorgungsanschlüsse oder zumindest dem ersten (445) und/oder zweiten (446) Hauptanschluss eingefügt sind; und
ein Ventilgehäuse (435) zum Aufnehmen der Ventileinheit (450) und der Schutzschaltungen (460, 470).

2. Ventilvorrichtung (330) gemäß Anspruch 1, wobei der Aktor (452) über den ersten Versorgungsanschluss (441) an ein erstes elektrisches Versorgungspotenzial des ersten Steuergeräts (310) anschließbar ist, wobei der Aktor (452) über den zweiten Versorgungsanschluss (442) an ein zweites elektrisches Versorgungspotenzial des zweiten Steuergeräts (320) anschließbar ist, wobei der Aktor (452) über den ersten Hauptanschluss (445) und den zweiten Hauptanschluss (446) an ein gemeinsames elektrisches Massepotenzial der Steuergeräte (310, 320) anschließbar ist und/oder wobei der Aktor (452) über den ersten Versorgungsanschluss (441) an ein elektrisches Versorgungspotenzial des ersten Steuergeräts (310) anschließbar ist, wobei der Aktor (452) über den zweiten Versorgungsanschluss (442) an ein das elektrische Versorgungspotenzial des zweiten Steuergeräts (320) anschließbar ist, wobei der Aktor (452) über den ersten Hauptanschluss (445) mit einem ersten elektrischen Massepotenzial und über den zweiten Hauptanschluss (446) mit einem zweiten elektrischen Massepotenzial der Steuergeräte (310, 320) anschließbar ist.

3. Ventilvorrichtung (330) gemäß einem der vorangegangenen Ansprüche, wobei der erste Versorgungsanschluss (441) und der zweite Versorgungsanschluss (442) ein Versorgungsspannungsanschluss sind und der erste (445) und zweite (446) Hauptanschluss ein Masseanschluss sind oder wobei der erste Versorgungsanschluss (441) und der zweite Versorgungsanschluss (442) ein Masseanschluss sind und der erste (445) und zweite (446) Hauptanschluss ein Versorgungsspannungsanschluss sind.

4. Ventilvorrichtung (330) gemäß einem der vorangegangenen Ansprüche, wobei das Diodenelement (464) der ersten Schutzschaltung (460) zwischen den ersten Versorgungsanschluss (441) und den Aktor (452) geschaltet ist, wobei die Sicherungseinrichtung (462) der ersten Schutzschaltung (460) zwischen den zweiten Versorgungsanschluss (442) und den Aktor (452) geschaltet ist, wobei die Sicherungseinrichtung (472) der zweiten Schutzschaltung (470) zwischen den Aktor (452) und den ersten Hauptanschluss (445) geschaltet ist, wobei das Diodenelement (474) der zweiten Schutzschaltung (470) zwischen den Aktor (452) und den zweiten Hauptanschluss (446) geschaltet ist.

5. Ventilvorrichtung (330) gemäß einem der vorangegangenen Ansprüche, wobei eine Durchlassrichtung des Diodenelements (464) der ersten Schutzschaltung (460) von dem ersten Versorgungsanschluss (441) zu dem Aktor (452) verläuft, wobei eine Durchlassrichtung des Diodenelements (474) der zweiten Schutzschaltung (470) von dem Aktor (452) zu dem zweiten Hauptanschluss (446) verläuft.

6. Ventilvorrichtung (330) gemäß einem der vorangegangenen Ansprüche, wobei die Ventileinheit (450) zumindest einen weiteren Aktor (454) zum Betätigen der Ventileinheit (450) aufweist, wobei die Ventilvorrichtung (330) mindestens einen dritten Versorgungsanschluss (443) zum elektrischen Verbinden des weiteren Aktors (454) mit dem ersten Steuergerät (310), mindestens einen vierten Versorgungsanschluss (444) zum elektrischen Verbinden des weiteren Aktors (454) mit dem zweiten Steuergerät (320) und zumindest eine weitere Schutzschaltung (480) aufweist, wobei die weitere Schutzschaltung (480) elektrisch zwischen den dritten Versorgungsanschluss (443) und den vierten Versorgungsanschluss (444) einerseits und den weiteren Aktor (454) andererseits geschaltet ist, wobei die zweite Schutzschaltung (470) elektrisch zwischen den weiteren Aktor (454) einerseits und den ersten Hauptanschluss (445) und den zweiten Hauptanschluss (446) andererseits geschaltet ist.

7. Ventilvorrichtung (330) gemäß Anspruch 6, wobei das Diodenelement (484) der weiteren Schutzschaltung (480) zwischen den dritten Versorgungsanschluss (443) und den weiteren Aktor (454) geschaltet ist, wobei die Sicherungseinrichtung (482) der weiteren Schutzschaltung (480) zwischen den vierten Versorgungsanschluss (444) und den weiteren Aktor (454) geschaltet ist.

8. Ventilvorrichtung (330) gemäß einem der Ansprüche 6 bis 7, wobei der weitere Aktor (454) über den dritten Versorgungsanschluss (443) an das erste elektrische Versorgungspotenzial anschließbar ist, wobei der weitere Aktor (454) über den vierten Versorgungsanschluss (444) an das zweite elektrische Versorgungspotenzial anschließbar ist.

9. Ventilvorrichtung (330) gemäß einem der vorangegangenen Ansprüche, wobei die Sicherungseinrichtungen (462, 472, 482) der Schutzschaltungen (460, 470, 480) auswechselbar in den Schutzschaltungen (460, 470, 480) angeordnet sind.

10. System (305) für ein Fahrzeug (300), wobei das System (305) folgende Merkmale aufweist:
eine Ventilvorrichtung (330) gemäß einem der vorangegangenen Ansprüche; und
das erste Steuergerät (310) und das zweite Steuergerät (320), wobei die Steuergeräte (310, 320) elektrisch mit der Ventilvorrichtung (330) verbunden sind

11. System (305) gemäß Anspruch 10, wobei die Ventilvorrichtung (330) eine erste Gruppe von mechanisch zusammengefassten elektrischen Anschlüssen zum Anschließen des ersten Steuergeräts (310) und eine zweite Gruppe von mechanisch zusammengefassten elektrischen Anschlüssen zum Anschließen des zweiten Steuergeräts (320) aufweist.

## Claims

1. Valve device (330) for a system (305) for a vehicle (300), wherein the system (305) has a first control device (310) and a second control device (320), wherein the control devices (310, 320) can be connected electrically to the valve device (330), wherein the valve device (330) has the following features;
a valve unit (450) for setting a pressure of a working medium for the system (305), wherein the valve unit (450) has at least one actuator (452) for actuating the valve unit (450);
a first supply terminal (441) for the electrical connection of the actuator (452) to the first control device (310), a second supply terminal (442) for the electrical connection of the actuator (452) to the second control device (320), a first main terminal (445) for the electrical connection of the actuator (452) to the first control device (310) and a second main terminal (446) for the electrical connection of the actuator (452) to the second control device (320);
a first electrical protective circuit (460) and a second electrical protective circuit (470), wherein the first protective circuit (460) is connected electrically between the first supply terminal (441) and the second supply terminal (442) on the one hand and the actuator (452) on the other hand, wherein the second protective circuit (470) is connected electrically between the actuator (452) on the one hand and the first main terminal (445) and the second main terminal (446) on the other hand, wherein each protective circuit (460, 470) has an electrical safety apparatus (462, 472) and a diode element (464, 474), which are inserted serially into at least the first (441) and/or second (442) supply terminals or at least the first (445) and/or second (446) main terminal; and
a valve housing (435) for receiving the valve unit (450) and the protective circuits (460, 470).

2. Valve device (330) according to claim 1, wherein the actuator (452) can be connected via the first supply terminal (441) to a first electrical supply potential of the first control device (310), wherein the actuator (452) can be connected via the second supply terminal (442) to a second electrical supply potential of the second control device (320), wherein the actuator (452) can be connected via the first main terminal (445) and the second main terminal (446) to a common electrical ground potential of the control devices (310, 320) and/or wherein the actuator (452) can be connected via the first supply terminal (441) to an electrical supply potential of the first control device (310), wherein the actuator (452) can be connected via the second supply terminal (442) to the electrical supply potential of the second control device (320), wherein the actuator (452) can be connected via the first main terminal (445) to a first electrical ground potential and via the second main terminal (446) to a second electrical ground potential of the control devices (310, 320).

3. Valve device (330) according to any of the preceding claims, wherein the first supply terminal (441) and the second supply terminal (442) are a supply voltage terminal and the first (445) and second (446) main terminals are a ground terminal, or wherein the first supply terminal (441) and the second supply terminal (442) are a ground terminal and the first (445) and second (446) main terminals are a supply voltage terminal.

4. Valve device (330) according to any of the preceding claims, wherein the diode element (464) of the first protective circuit (460) is connected between the first supply terminal (441) and the actuator (452), wherein the safety apparatus (462) of the first protective circuit (460) is connected between the second supply terminal (442) and the actuator (452), wherein the safety apparatus (472) of the second protective circuit (470) is connected between the actuator (452) and the first main terminal (445), wherein the diode element (474) of the second protective circuit (470) is connected between the actuator (452) and the second main terminal (446).

5. Valve device (330) according to any of the preceding claims, wherein a forward direction of the diode element (464) of the first protective circuit (460) runs from the first supply terminal (441) to the actuator (452), wherein a forward direction of the diode element (474) of the second protective circuit (470) runs from the actuator (452) to the second main terminal (446).

6. Valve device (330) according to any of the preceding claims, wherein the valve unit (450) has at least one further actuator (454) for actuating the valve unit (450), wherein the valve device (330) has at least one third supply terminal (443) for the electrical connection of the further actuator (454) to the first control device (310), at least one fourth supply terminal (444) for the electrical connection of the further actuator (454) to the second control device (320) and at least one further protective circuit (480), wherein the further protective circuit (480) is connected electrically between the third supply terminal (443) and the fourth supply terminal (444) on the one hand and the further actuator (454) on the other hand, wherein the second protective circuit (470) is connected electrically between the further actuator (454) on the one hand and the first main terminal (445) and the second main terminal (446) on the other hand.

7. Valve device (330) according to claim 6, wherein the diode element (484) of the further protective circuit (480) is connected between the third supply terminal (443) and the further actuator (454), wherein the safety apparatus (482) of the further protective circuit (480) is connected between the fourth supply terminal (444) and the further actuator (454).

8. Valve device (330) according to any of claims 6 to 7, wherein the further actuator (454) can be connected via the third supply terminal (443) to the first electrical supply potential, wherein the further actuator (454) can be connected via the fourth supply terminal (444) to the second electrical supply potential.

9. Valve device (330) according to any of the preceding claims, wherein the safety apparatuses (462, 472, 482) of the protective circuits (460, 470, 480) are arranged exchangeably in the protective circuits (460, 470, 480).

10. System (305) for a vehicle (300), wherein the system (305) has the following features:
a valve device (330) according to any of the preceding claims; and
the first control device (310) and the second control device (320), wherein the control devices (310, 320) are connected electrically to the valve device (330).

11. System (305) according to claim 10, wherein the valve device (330) has a first group of mechanically combined electrical terminals for the connection of the first control device (310) and a second group of mechanically combined electrical terminals for the connection of the second control device (320).

## Revendications

1. Dispositif de soupape (330) pour un système (305) pour un véhicule (300), dans lequel le système (305) présente un premier appareil de commande (310) et un second appareil de commande (320), dans lequel les appareils de commande (310, 320) peuvent être connectés électriquement au dispositif de soupape (330), dans lequel le dispositif de soupape (330) présente les caractéristiques suivantes :
une unité de soupape (450) destinée au réglage d'une pression d'un fluide de travail pour le système (305), dans lequel l'unité de soupape (450) présente au moins un actionneur (452) destiné à l'actionnement de l'unité de soupape (450) ;
une première borne d'alimentation (441) destinée à la liaison électrique de l'actionneur (452) au premier appareil de commande (310), une deuxième borne d'alimentation (442) destiné à la liaison électrique de l'actionneur (452) au second appareil de commande (320), une première borne principale (445) destinée à la connexion électrique de l'actionneur (452) au premier appareil de commande (310) et une seconde borne principale (446) destinée à la connexion électrique de l'actionneur (452) au second appareil de commande (320) ;
un premier circuit de protection électrique (460) et un second circuit de protection électrique (470), dans lequel le premier circuit de protection (460) est commuté électriquement entre la première borne d'alimentation (441) et la deuxième borne d'alimentation (442) d'une part et l'actionneur (452) d'autre part, dans lequel le second circuit de protection (470) est commuté électriquement entre l'actionneur (452) d'une part et la première borne principale (445) et la seconde borne principale (446) d'autre part, dans lequel chaque circuit de protection (460, 470) présente un équipement de sécurité électrique (462, 472) et un élément de diode (464, 474) qui sont insérés en série dans au moins les première (441) et/ou deuxième (442) bornes d'alimentation ou au moins la première (445) et/ou la seconde (446) borne principale ; et
un boîtier de soupape(435) destiné à la réception de l'unité de soupape (450) et des circuits de protection (460, 470).

2. Dispositif de soupape (330) selon la revendication 1, dans lequel l'actionneur (452) peut être raccordé à un premier potentiel d'alimentation électrique du premier appareil de commande (310) par le biais de la première borne d'alimentation (441), dans lequel l'actionneur (452) peut être raccordé à un second potentiel d'alimentation électrique du second appareil de commande (320) par le biais de la deuxième borne d'alimentation (442), dans lequel l'actionneur (452) peut être raccordé à un potentiel de masse électrique commun des appareils de commande (310, 320) par le biais de la première borne principale (445) et de la seconde borne principale (446) et/ou dans lequel l'actionneur (452) peut être raccordé à un potentiel d'alimentation électrique du premier appareil de commande (310) par le biais de la première borne d'alimentation (441), dans lequel l'actionneur (452) peut être raccordé à un potentiel d'alimentation électrique du second appareil de commande (320) par le biais de la deuxième borne d'alimentation (442), dans lequel l'actionneur (452) peut être raccordé à un premier potentiel de masse électrique par le biais de la première borne principale (445) et à un second potentiel de masse électrique des appareils de commande (310, 320) par le biais de la seconde borne principale (446).

3. Dispositif de soupape (330) selon l'une quelconque des revendications précédentes, dans lequel la première borne d'alimentation (441) et la deuxième borne d'alimentation (442) sont une borne de tension d'alimentation et la première (445) et la seconde (446) bornes principales sont une borne de masse ou dans lequel la première borne d'alimentation (441) et la deuxième borne d'alimentation (442) sont une borne de masse et la première (445) et la seconde (446) bornes principales sont une borne de tension d'alimentation.

4. Dispositif de soupape (330) selon l'une quelconque des revendications précédentes, dans lequel l'élément de diode (464) du premier circuit de protection (460) est commuté entre la première borne d'alimentation (441) et l'actionneur (452), dans lequel l'équipement de sécurité (462) du premier circuit de protection (460) est commuté entre la deuxième borne d'alimentation (442) et l'actionneur (452), dans lequel l'équipement de sécurité (472) du second circuit de protection (470) est commuté entre l'actionneur (452) et la première borne principale (445), dans lequel l'élément de diode (474) du second circuit de protection (470) est commuté entre l'actionneur (452) et la seconde borne principale (446).

5. Dispositif de soupape (330) selon l'une quelconque des revendications précédentes, dans lequel un sens passant de l'élément de diode (464) du premier circuit de protection (460) s'étend de la première borne d'alimentation (441) à l'actionneur (452), dans lequel un sens passant de l'élément de diode (474) du second circuit de protection (470) s'étend de l'actionneur (452) à la seconde borne principale (446).

6. Dispositif de soupape(330) selon l'une quelconque des revendications précédentes, dans lequel l'unité de soupape (450) présente au moins un actionneur supplémentaire (454) destiné à l'actionnement de l'unité de soupape (450), dans lequel le dispositif de soupape (330) présente au moins une troisième borne d'alimentation (443) destinée à la connexion électrique de l'actionneur supplémentaire (454) au premier appareil de commande (310), au moins une quatrième borne d'alimentation (444) destinée à la connexion électrique de l'actionneur supplémentaire 454) au second appareil de commande (320) et au moins un circuit de protection supplémentaire (480), dans lequel le circuit de protection supplémentaire (480) est commuté électriquement entre la troisième borne d'alimentation (443) et la quatrième borne d'alimentation (444) d'une part et l'actionneur supplémentaire (454) d'autre part, dans lequel le second circuit de protection (470) est commuté électriquement entre l'actionneur supplémentaire (454) d'une part et la première borne principale (445) et la seconde borne principale (446) d'autre part.

7. Dispositif de soupape (330) selon la revendication 6, dans lequel l'élément de diode (484) du circuit de protection supplémentaire (480) est commuté entre la troisième borne d'alimentation (443) et l'actionneur supplémentaire (454), dans lequel l'équipement de sécurité (482) du circuit de protection supplémentaire (480) est commuté entre la quatrième borne d'alimentation (444) et l'actionneur supplémentaire (454).

8. Dispositif de soupape (330) selon l'une quelconque des revendications 6 à 7, dans lequel l'actionneur supplémentaire (454) peut être raccordé au premier potentiel d'alimentation électrique par le biais de la troisième borne d'alimentation (443), dans lequel l'actionneur supplémentaire (454) peut être raccordé au second potentiel d'alimentation électrique par le biais de la quatrième borne d'alimentation (444).

9. Dispositif de soupape (330) selon l'une quelconque des revendications précédentes, dans lequel les équipements de sécurité (462, 472, 482) des circuits de protection (460, 470, 480) sont disposés dans les circuits de protection (460, 470, 480) de manière interchangeable.

10. Système (305) pour un véhicule (300), dans lequel le système (305) présente les caractéristiques suivantes :
un dispositif de soupape (330) selon l'une quelconque des revendications précédentes ; et
le premier appareil de commande (310) et le second appareil de commande (320), dans lequel les appareils de commande (310, 320) sont reliés électriquement au dispositif de soupape (330).

11. Système (305) selon la revendication 10, dans lequel le dispositif de soupape (330) présente un premier groupe de bornes électriques réunies mécaniquement destinées au raccordement du premier appareil de commande (310) et un second groupe de bornes électriques réunies mécaniquement destinées au raccordement du second appareil de commande (320).
